# EUROPEAN PATENT APPLICATION

(11) **EP 4 524 409 A1**
(43) Date of publication of application: **19.03.2025**
(21) Application number: 23803585.1
(22) Date of filing: 10.05.2023
(51) Int. Cl.: F16B 35/00, F16B 35/04, F16B 37/04, F16B 5/02

(54) **FIXTURE**

(30) Priority: 11.05.2022 JP 2022078471
(71) Applicant: Ferrotec Material Technologies Corporation, Chuo-ku Tokyo 103-0027 (JP)
(72) Inventor: SAGISAKA, Keisuke, Tokyo 103-0027 (JP)
(74) Representative: Håmsø Patentbyrå AS
(86) International application number: PCT/JP2023/017603
(87) International publication number: WO 2023/219110

(57) **Abstract**

A fixture for positioning and fixing an object to be fixed with respect to a fixing object that includes a column body having a screw shape includes a coupling portion formed with a thread fittable to the column body, an extending portion formed with a male thread, and a flange portion.

## Description

### CROSS-REFERENCE TO RELATED APPLICATION

This international application claims the benefit of Japanese Patent Application No. 2022-078471 filed on May 11, 2022 with the Japan Patent Office, the entire disclosure of which is incorporated herein by reference.

### TECHNICAL FIELD

The present invention relates to a fixture for positioning and fixing a fixing object and an object to be fixed in a specific positional relationship.

### BACKGROUND ART

There have been known fixtures for positioning and fixing an object to be fixed to a fixing object including a column body having a screw shape, the object to be fixed having a plate shape extending along a plane crossing an axis line of the column body, in a positional relationship where an axis line of a through hole penetrating the object to be fixed in front-back directions of the object to be fixed extends along an axis line of the column body.

For example, a fixture disclosed in Patent Document 1 comprises:
a first fixing member (through bolt) interposed between a fixing object (fixing member) and an object to be fixed (adjusting member) and coupled to a column body (fixing bolt) on one surface side of the object to be fixed in front-back directions of the object to be fixed; a second fixing member (nut) coupled to the first fixing member via a through hole (bolt hole) on an other surface side of the object to be fixed in the front-back directions; and a third fixing member (fastening bolt) having a screw shape for holding and fixing the first fixing member between the third fixing member and the column body from the other surface side of the object to be fixed in the front-back directions.

In the aforementioned fixture, the first fixing member is fixed to the column body with the third fixing member, and the object to be fixed is positioned with a flange (adjusting member holding surface) of the first fixing member. Then, the object to be fixed is held between and fixed by the flange of the first fixing member and the second fixing member. In this case, the first fixing member is fixed at any position in a direction of an axis line of the column body, and then, while the first fixing member is held in that state not to be rotated, the third fixing member is fitted to the column body. In this way, a position for positioning the object to be fixed (that is, position of the flange) can be adjusted freely according to the position of the first fixing member. Thus, all operations from the positioning to the fixing of the object to be fixed can be performed from the other surface side of the object to be fixed in the front-back directions.

### PRIOR ART DOCUMENTS

### PATENT DOCUMENTS

Patent Document 1: Japanese Examined Utility Model Application Publication No. H03-047826

### SUMMARY OF THE INVENTION

### PROBLEMS TO BE SOLVED BY THE INVENTION

However, in this fixture, there is a margin for improvement in terms of workability, for example, in that the fixture requires that the first fixing member be fixed at any position in the direction of the axis line of the column body, and that the third fixing member be fitted to the column body while the first fixing member is held not to be rotated.

The present invention has been made to solve such a problem, and an object of the present invention is to provide a technique for improving workability of a fixture compared to conventional arts.

### MEANS FOR SOLVING THE PROBLEMS

The first aspect of the present disclosure for solving the aforementioned problem is a fixture for positioning and fixing an object to be fixed to a fixing object including a column body having a screw shape, the object to be fixed having a plate shape extending along a plane crossing an axis line of the column body, in a positional relationship where an axis line of a through hole penetrating the object to be fixed in front-back directions of the object to be fixed extends along the axis line of the column body, the fixture comprising: a coupling portion formed with a thread for coupling fittable to the column body on one surface side of the object to be fixed in the front-back directions; an extending portion that extends from the coupling portion in a length reachable to an other surface side of the object to be fixed in the front-back directions through the through hole and that includes a male thread for coupling formed along an outer peripheral surface of a region of the extending portion reachable to the other surface side; and a flange portion that is a member extending from the coupling portion to be larger in diameter than the through hole and that is formed with a contacting surface directly or indirectly contactable with the one surface of the object to be fixed in the front-back directions in a situation where the coupling portion is fitted to the column body. The thread of the coupling portion and the male thread of the extending portion are formed to have a same thread pitch as that of the column body.

The aforementioned aspect may be configured as the second aspect described below.

In the second aspect, the fixture further comprises a fixing member couplable to the extending portion on the other surface side of the object to be fixed in the front-back directions. The fixing member is a tubular member that extends to encircle a part of a region of the extending portion located on the other surface side of the object to be fixed in the front-back directions around the axis line of the column body. The fixing member includes a female thread for coupling that is formed along an inner peripheral surface of the fixing member and that is fittable to the male thread of the extending portion. The female thread has a same thread pitch as that of the column body.

Each of the aforementioned aspects may be configured as the third aspect described below.

In the third aspect, in a case where a male thread is formed along an outer peripheral surface of the column body, the coupling portion is a tubular member that extends to encircle the column body around the axis line of the column body. The thread of the coupling portion is a female thread for coupling that is formed along an inner peripheral surface of the coupling portion and that is fittable to the male thread of the column body.

In the fixture of each of the aforementioned aspects, the coupling portion is fitted to the column body, and then, while the object to be fixed is positioned by the flange portion or the fixing member with respect to the fixing object, the object to be fixed is held between and fixed by the flange portion and the fixing member. In this way, all operations from the positioning to the fixing of the object to be fixed with respect to the fixing object can be performed from the other surface side of the object to be fixed in the front-back directions.

The aforementioned fixture can be displaced to any position in a direction of the axis line of the column body according to the fitting state of the fixture to the thread of the column body. Therefore, according to the position of the fixture, a position for positioning the object to be fixed using the flange portion with respect to the fixing object can be freely adjusted as well. It should be noted that, in a situation where the fixing member is attached, it is possible to displace only a main body of the fixture (coupling portion, extending portion and flange portion; the same applies hereinafter) with respect to the column body by holding the fixing member not to be rotated.

Moreover, the fixing member can be displaced to any position in the direction of the axis line of the column body according to the fitting state of the fixing member to the male thread of the extending portion. Therefore, according to the position of the fixing member, a position for positioning the object to be fixed using the fixing member with respect to the fixing object can be freely adjusted as well. It should be noted that, in a case where the fixing member is rotated, it is possible to displace only the fixing member with respect to the column body by holding the main body of the fixture not to be rotated.

As described above, in the fixture of each of the aforementioned aspects, by holding one of the main body of the fixture and the fixing member while rotating the other one of them, it is possible to displace and fix only the other one of them with respect to the column body. It is because the threads of the fixture are formed to have the same thread pitch. In this way, the positioning and the fixing can be performed as a series of operations, which results in improvement in workability.

Furthermore, each of the aforementioned aspects may be configured as the fourth aspect described below.

In the fourth aspect, a holding piece is formed on an end portion side of the region of the extending portion reachable to the other surface side of the object to be fixed in the front-back directions for enabling holding of the end portion side to control rotation of the extending portion around the axis line of the column body.

In the fixture of the fourth aspect, by using the holding piece, an operation of rotating the fixing member while holding the main body of the fixture can be performed effectively.

### BRIEF DESCRIPTION OF THE DRAWINGS

FIG. 1 is a front cross-sectional view of an attached state of a fixture according to an embodiment of the present invention as viewed in a cross section taken along a plane formed by a direction of an axis line and a direction intersecting therewith.
FIG. 2 is a front cross-sectional view of a fixture according to an embodiment of the present invention as viewed in a cross section taken along a plane formed by a direction of an axis line and a direction intersecting therewith.
FIG. 3 is a front cross-sectional view of a fixture according to another embodiment of the present invention.
FIG. 4 is a front cross-sectional view of a fixture according to still another embodiment of the present invention.
FIG. 5 is a front cross-sectional view illustrating a process of positioning and fixing an object to be fixed to a fixing object using a fixture according to an embodiment of the present invention.

### EXPLANATION OF REFERENCE NUMERALS

1...fixture, 10...fixing object, 11...column body, 13...axis line, 15... male thread, 17...female thread, 20... object to be fixed, 21... through hole, 23... axis line, 25...cushioning member, 27... cushioning member, 100... main body, 111...thread, 121...male thread, 123...holding piece, 130...flange portion, 131...contacting surface, 200...fixing member, 210...female thread, 220...contacting surface

### MODE FOR CARRYING OUT THE INVENTION

Hereinafter, an embodiment of the present invention will be described with reference to the accompanying drawings.

### (1) Overall Configuration

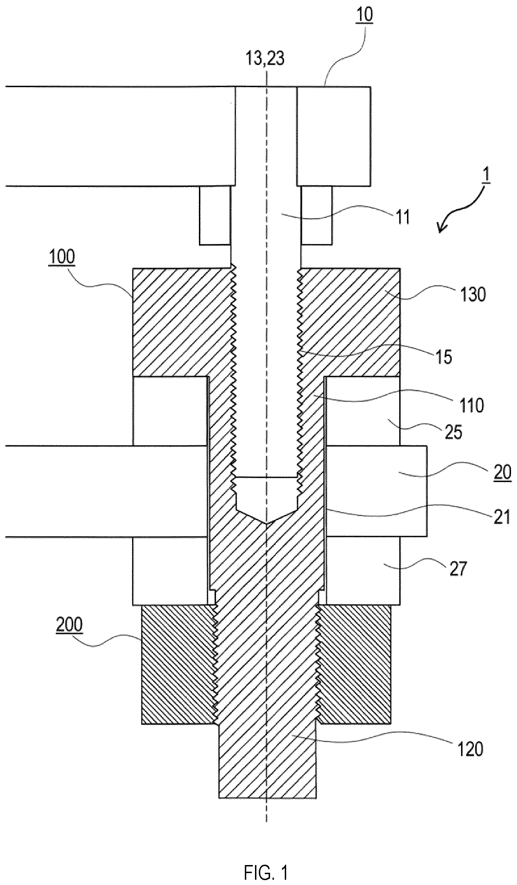

As illustrated in FIG. 1, a fixture 1 is configured to position and fix an object to be fixed 20 to a fixing object 10 including a column body 11 having a screw shape, the object to be fixed 20 having a plate shape extending along a plane crossing an axis line 13 of the column body 11, in a positional relationship where an axis line 23 of a through hole 21 penetrating the object to be fixed 20 in front-back directions of the object to be fixed 20 extends along the axis line 13 of the column body 11. An example is described herein in which the axis line 23 of the through hole 21 coincides with the axis line 13 of the column body 11, but the present disclosure may also include a case in which the both axis lines do not coincide with each other depending on factors such as fixing or positioning accuracy of parts.

In the present embodiment, a configuration is exemplified in which the column body 11 extends from a back surface of the fixing object 10 toward a lower side of FIG. 1, and in which a male thread 15 is formed to extend in a spiral shape from a base end (upper end in FIG. 1) side toward a tip end (lower end in FIG. 1) side of an outer peripheral surface of the column body 11.

The fixture 1 is configured such that a main body 100 that is coupled to the column body 11 on one surface (upper surface in FIG. 1) side of the object to be fixed 20 in the front-back directions extends through the through hole 21 and is coupled to a fixing member 200 on the other surface (lower surface in FIG. 1) side in the front-back directions.

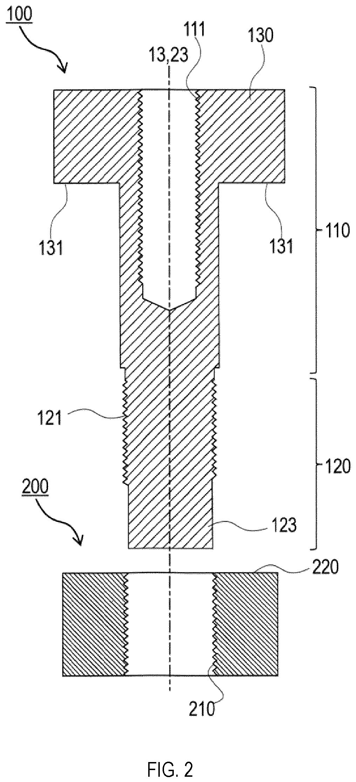

The main body 100 is to be interposed between the fixing object 10 and the object to be fixed 20 and, as illustrated in FIG. 2, comprises a coupling portion 110, an extending portion 120, and a flange portion 130.

The coupling portion 110 is formed with a thread 111 for coupling fittable to the column body 11 on the one surface side of the object to be fixed 20 in the front-back directions. A position of the main body 100 in directions of the axis lines 13 and 23 can be freely displaced according to the degree of length of fitting between the male thread 15 of the column body 11 and the thread 111.

In the present embodiment, the coupling portion 110 is a member that extends to encircle the column body 11 around the axis lines 13 and 23, and that has a diameter smaller than the diameter of the through hole 21. The difference between the diameters of the coupling portion 110 and the through hole 21 is set to be large enough to allow the extending portion 120 to reach the other surface side of the object to be fixed 20 in the front-back directions through the through hole 21 even when the axis line 23 of the through hole 21 does not coincide with the axis line 13 of the column body 11. The coupling portion 110 is open-ended on its base end (upper end in each of FIGS. 1 and 2) side and close-ended on its tip end (lower end in each of FIGS. 1 and 2) side.

The thread 111 is a female thread formed along an inner peripheral surface of the coupling portion 110 to extend in a spiral shape from a base end side toward a tip end side of the inner peripheral surface of the coupling portion 110. The thread 111 is formed to have the same thread pitch as that of the male thread 15 of the column body 11.

The extending portion 120 is a columnar member that extends from the coupling portion 110 in a length to reach the other surface side of the object to be fixed 20 in the front-back directions through the through hole 21 and that has a diameter smaller than the diameter of the through hole 21.

A male thread 121 for coupling is formed along an outer peripheral surface of a region of the extending portion 120 that reaches the other surface side of the object to be fixed 20 in the front-back directions and that is adjacent to the through hole 21.

The male thread 121 is formed to extend in a spiral shape from a base end (upper end in each of FIGS. 1 and 2) side toward a tip end (lower end in each of FIGS. 1 and 2) side of an outer peripheral surface of the extending portion 120 and to have the same thread pitch as those of the male thread 15 of the column body 11 and the thread 111 of the coupling portion 110.

A holding piece 123 is formed on an end portion side of the region of the extending portion 120 that reaches the other surface side of the object to be fixed 20 in the front-back directions. The holding piece 123 is configured to be held to control rotation of the extending portion 120 around the axis lines 13 and 23. The holding piece 123 has an external shape that comprises at least two sides facing each other in a cross-sectional view taken along a plane crossing the axis lines 13 and 23, and is configured such that a tool such as a wrench can fit to the external shape of the holding piece 123. In the present embodiment, the external shape of the holding piece 123 may be a polygonal shape such as a square shape or a hexagonal shape.

The flange portion 130 is a member that extends from the coupling portion 110 to be larger in diameter than the through hole 21. The flange portion 130 is formed with a contacting surface 131, which is brought into direct or indirect contact with the one surface of the object to be fixed 20 in the front-back directions in a situation where the coupling portion 110 is fitted to the column body 11.

In the present embodiment, a cushioning member 25 having a cylindrical shape is disposed between the flange portion 130 and the object to be fixed 20. The contacting surface 131 is configured to be brought into indirect contact with the object to be fixed 20 via the cushioning member 25. In the present embodiment, a washer is used as the cushioning member 25.

As illustrated in FIG. 2, the fixing member 200 is a tubular member that extends to encircle a part of the region (region adjacent to the through hole 21) of the extending portion 120 located on the other surface side of the object to be fixed 20 in the front-back directions around the axis lines 13 and 23.

A female thread 210 for coupling is formed in the fixing member 200 along an inner peripheral surface of the fixing member 200, the female thread 210 being fittable to the male thread 121 of the extending portion 120. The female thread 210 is formed to extend in a spiral shape from a base end (upper end in each of FIGS. 1 and 2) side toward a tip end (lower end in each of FIGS. 1 and 2) side of the inner peripheral surface of the fixing member 200. The female thread 210 is formed to have the same thread pitch as those of the male thread 15 of the column body 11, the thread 111 of the coupling portion 110, and the male thread 121 of the extending portion 120.

The fixing member 200 is a member that extends to be larger in diameter than the through hole 21. The fixing member 200 is formed with a contacting surface 220, which is brought into direct or indirect contact with the other surface of the object to be fixed 20 in the front-back directions in a situation where the fixing member 200 is fitted to the extending portion 120.

In the present embodiment, a cushioning member 27 having a cylindrical shape is disposed between the fixing member 200 and the object to be fixed 20. The contacting surface 220 is configured to be brought into indirect contact with the object to be fixed 20 via the cushioning member 27. In the present embodiment, a washer is used as the cushioning member 27.

In the present embodiment, a nut fittable to the male thread 121 of the extending portion 120 is used as the fixing member 200.

### (2) Modified Example

The embodiment of the present invention has been explained above, but the present invention is not limited to the aforementioned embodiment and may be practiced in various other forms within a technical scope of the present invention.

For example, in the aforementioned embodiment, a configuration has been exemplified in which the fixture 1 is used to fix the object to be fixed 20 at any position below the fixing object 10. The fixture 1 may be configured to fix the object to be fixed 20 at any position with respect to the fixing object 10 regardless of a positional relationship between the fixing object 10 and the object to be fixed 20.

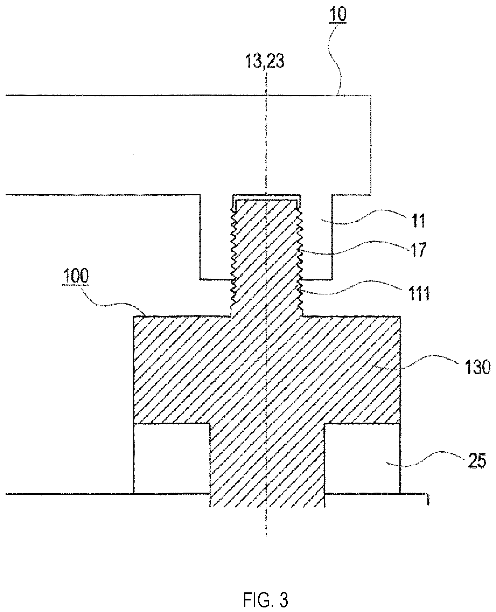

Moreover, in the aforementioned embodiment, a configuration has been exemplified in which the male thread 15 is formed in the column body 11, and the female thread as the thread 111 is formed in the coupling portion 110. Alternatively, as illustrated in FIG. 3, a configuration may be adopted in which a male thread and a female thread are formed in a reverse manner, that is, a female thread 17 is formed in the column body 11, and a male thread as the thread 111 is formed in the coupling portion 110.

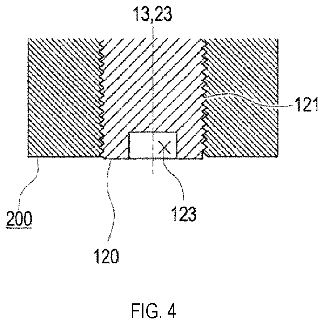

Furthermore, in the aforementioned embodiment, a configuration has been exemplified in which the holding piece 123 having a polygonal external shape is formed on a tip end side with respect to the male thread 121 of the extending portion 120. Alternatively, as illustrated in FIG. 4, the holding piece 123 may be a concave portion that is formed from a tip end toward a base end of the extending portion 120 and that has a polygonal profile in a cross section taken along a plane crossing the axis lines 13 and 23. This configuration enables both of the male thread 121 and the holding piece 123 to reach the tip end of the extending portion 120.

Furthermore, in the aforementioned embodiment, a configuration has been exemplified in which the flange portion 130 of the main body 100 and the object to be fixed 20 indirectly contact each other via the cushioning member 25, and the fixing member 200 and the object to be fixed 20 indirectly contact each other via the cushioning member 27. Alternatively, either one or both of the pairs of the flange 130 of the main body 100 and the object to be fixed 20, and the fixing member 200 and the object to be fixed 20 may be configured to directly contact each other without intervention of the cushioning members 25, 27.

Furthermore, in the aforementioned embodiment, a configuration has been exemplified in which the coupling portion 110 is a tubular member that is close-ended on its tip end side. A configuration has been exemplified in which a region from the tip end side of the coupling portion 110 to the tip end of the extending portion 120 is a columnar member. Alternatively, a tubular member that extends to encircle the axis lines 13 and 23 over the entire length of the region from the tip end side of the coupling portion 110 to the tip end of the extending portion 120 may be employed.

### (3) Action and Effect

In the fixture 1 of the aforementioned embodiment, the coupling portion 110 is fitted to the column body 11, and then, while the object to be fixed 20 is positioned with respect to the fixing object 10 by the flange portion 130 or the fixing member 200, the object to be fixed 20 is held between and fixed by the flange portion 130 and the fixing member 200. In this way, all operations from the positioning to the fixing of the object to be fixed 20 with respect to the fixing object 10 can be performed from the other surface side of the object to be fixed 20 in the front-back directions.

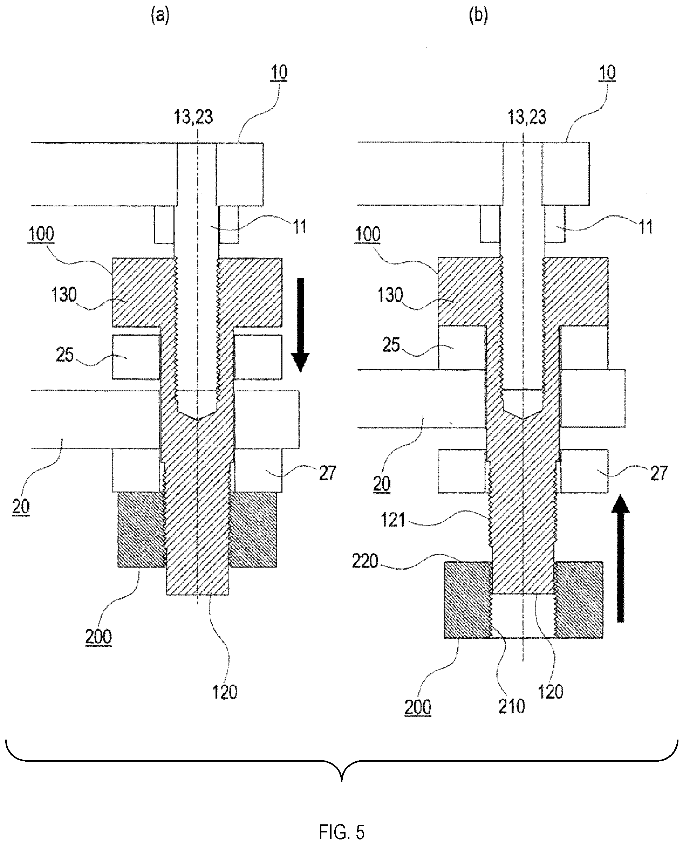

The main body 100 can be displaced to any position in directions of the axis lines 13 and 23 according to its fitting state to the thread (male thread 15) of the column body 11. Therefore, according to the position of the main body 100, a position for positioning the object to be fixed 20 using a position of the flange portion 130 with respect to the fixing object 10 can be freely adjusted as well. It should be noted that, in a situation where the fixing member 200 is attached, it is possible to displace only the main body 100 with respect to the column body 11 by holding the fixing member 200 not to be rotated (see, (a) of FIG. 5).

Moreover, the fixing member 200 can be displaced to any position in directions of the axis lines 13 and 23 according to its fitting state to the male thread 121 of the extending portion 120. Therefore, according to the position of the fixing member 200, a position for positioning the object to be fixed 20 using the fixing member 200 with respect to the fixing object 10 can be freely adjusted as well. It should be noted that, in a situation where the fixing member 200 is rotated, it is possible to displace only the fixing member 200 with respect to the column body 11 by holding the main body 100 not to be rotated (see, (b) of FIG. 5).

As described above, in the fixture 1, by holding one of the main body 100 and the fixing member 200 while rotating the other one of them, it is possible to displace and fix only the other one of them with respect to the column body 11. It is because the threads are formed to have the same thread pitch. In this way, the positioning and the fixing can be performed as a series of operations, which results in improvement in workability.

Moreover, in the fixture 1 of the aforementioned embodiment, by using the holding piece 123, it is possible to effectively perform the operation of holding the main body 100 while rotating the fixing member 200.

## Claims

1. A fixture for positioning and fixing an object to be fixed to a fixing object including a column body having a screw shape, the object to be fixed having a plate shape extending along a plane crossing an axis line of the column body, in a positional relationship where an axis line of a through hole penetrating the object to be fixed in front-back directions of the object to be fixed extends along the axis line of the column body, the fixture comprising:
a coupling portion formed with a thread for coupling fittable to the column body on one surface side of the object to be fixed in the front-back directions;
an extending portion that extends from the coupling portion in a length reachable to an other surface side of the object to be fixed in the front-back directions through the through hole and that includes a male thread for coupling formed along an outer peripheral surface of a region of the extending portion reachable to the other surface side; and
a flange portion that is a member extending from the coupling portion to be larger in diameter than the through hole and that is formed with a contacting surface directly or indirectly contactable with the one surface of the object to be fixed in the front-back directions in a situation where the coupling portion is fitted to the column body,
wherein the thread of the coupling portion and the male thread of the extending portion are formed to have a same thread pitch as that of the column body.

2. The fixture according to claim 1, further comprising:
a fixing member couplable to the extending portion on the other surface side of the object to be fixed in the front-back directions,
wherein the fixing member is a tubular member that extends to encircle a part of a region of the extending portion located on the other surface side of the object to be fixed in the front-back directions around the axis line of the column body, and
wherein the fixing member includes a female thread for coupling that is formed along an inner peripheral surface of the fixing member and that is fittable to the male thread of the extending portion, the female thread having a same thread pitch as that of the column body.

3. The fixture according to claim 1 or 2,
wherein, in a case where a male thread is formed along an outer peripheral surface of the column body, the coupling portion is a tubular member that extends to encircle the column body around the axis line of the column body, and the thread of the coupling portion is a female thread for coupling that is formed along an inner peripheral surface of the coupling portion and that is fittable to the male thread of the column body.

4. The fixture according to any one of claims 1 to 3,
wherein a holding piece is formed on an end portion side of the region of the extending portion reachable to the other surface side of the object to be fixed in the front-back directions for enabling holding of the end portion side to control rotation of the extending portion around the axis line of the column body.
